# EUROPEAN PATENT APPLICATION

(11) **EP 3 961 145 A1**
(43) Date of publication of application: **02.03.2022**
(21) Application number: 21194191.9
(22) Date of filing: 31.08.2021
(51) Int. Cl.: F41G 3/12, F41G 3/08, F41G 7/00, F41G 7/36, F42B 15/01, G05D 1/10

(54) **COURSE CORRECTION SYSTEMS FOR PROJECTILES**

(30) Priority: 31.08.2020 US 202063072456 P
(71) Applicant: Simmonds Precision Products, Inc., Vergennes, VT 05491 (US)
(72) Inventor: WILLENBRING, Gary, Waconia (US); NASH, Gregory, Shakopee (US); SQUILLACE, Guy, Prior Lake (US)
(74) Representative: Dehns

(57) **Abstract**

A course correction system (100) for a projectile can include a pre-steering trajectory determination module (101). The pre-steering trajectory determination module can be configured to receive a series of possible trajectories from an estimation module (103) including a physical model defining trajectory as a function of gravitational pull and one or more launch variables, and receive a sensor data from one or more on-board sensors (105) of the projectile. The pre-steering trajectory determination module can also be configured to reduce the possible trajectories from the estimation module to one or more refined trajectories using the sensor data, and output the one or more refined trajectories.

## Description

### FIELD

This disclosure relates to projectiles, more specifically course correction systems for projectiles.

### BACKGROUND

For guided munitions, for example, a midcourse correction at or near apogee from GPS or other location techniques can be desired to mitigate launch errors. Typically an onboard GPS system provides data for position and velocity information. However this signal can be jammed or spoofed in contested spaces. Without GPS or other location techniques, existing guided munition effectiveness is significantly reduced to that of a "dumb" round, with significant uncertainty of where it is, or where to go, or even experiencing flight instabilities due to incorrect airspeed information.

Such conventional methods and systems have generally been considered satisfactory for their intended purpose. However, there is still a need in the art for improved course correction systems for projectiles. The present disclosure provides a solution for this need.

### SUMMARY

In accordance with at least one aspect of this disclosure, a course correction system for a projectile can include a pre-steering trajectory determination module. The pre-steering trajectory determination module can be configured to receive a series of possible trajectories from an estimation module including a physical model defining trajectory as a function of gravitational pull and one or more launch variables, and receive a sensor data from one or more on-board sensors of the projectile. The pre-steering trajectory determination module can also be configured to reduce the possible trajectories from the estimation module to one or more refined trajectories using the sensor data, and output the one or more refined trajectories.

The pre-steering trajectory determination module can be configured to output the one or more refined trajectories to a steering control module of the projectile. In certain embodiments, the pre-steering trajectory determination module can include the estimation module.

The estimation module can be configured to execute a computational algorithm that inputs a plurality of randomized values into the physical model to create a plurality of output possible trajectories per time instance. For example, the computational algorithm can be a Monte Carlo simulation.

The estimation module can be configured to repeat the computational algorithm for a plurality of time instances and/or in real-time until one or both of apogee of fight or until the physical model is no longer descriptive of the trajectory due to steering.

In certain embodiments, the system can include the steering control module configured to input steering commands. The one or more refined trajectories can include position values, velocity values, Mach values, and/or dynamic pressure values configured to be used by the steering control module for steering.

In certain embodiments, the sensor data can include heading and pitch angle. In certain embodiments, the system can include the one or more on-board sensors.

In accordance with at least one aspect of this disclosure, a projectile can include a steering control module configured to input steering commands to one or more steering components of the projectile, and a course correction system for a projectile. Any suitable course correction system as disclosed herein, e.g., as described above, is contemplated herein.

In accordance with at least one aspect of this disclosure, a method of steering a projectile can include determining a series of possible trajectories using a physical model defining trajectory as a function of gravitational pull and one or more launch variables, receiving sensor data from one or more on-board sensors of the projectile, reducing the possible trajectories from the estimation module to one or more refined trajectories using the sensor data, and outputting the one or more refined trajectories to steer the projectile. In certain embodiments, reducing can include correlating an onboard measured pitch and heading with the possible trajectories, wherein the closest match or an interpolation between two possible trajectory values becomes the refined trajectory for output for use in steering. In certain embodiments, reducing can include curve fitting the possible trajectories using the sensor data and calculating a refined trajectory.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic diagram of an embodiment of a system in accordance with this disclosure;
Fig. 2 is a schematic diagram of an embodiment of a projectile in accordance with this disclosure;
Fig. 3 shows a trajectory chart of a projectile with terminal seeker phases of flight, e.g., in a GPS denied or contested environment;
Fig. 4 shows a trajectory chart of a projectile, highlighting example features to be exploited in trajectory estimation; and
Fig. 5 is a chart showing a linear trend at time X being consistent.

### DETAILED DESCRIPTION

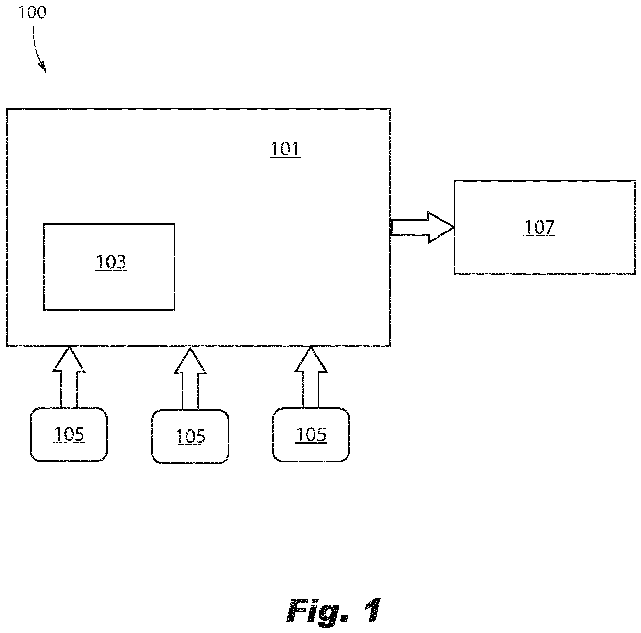

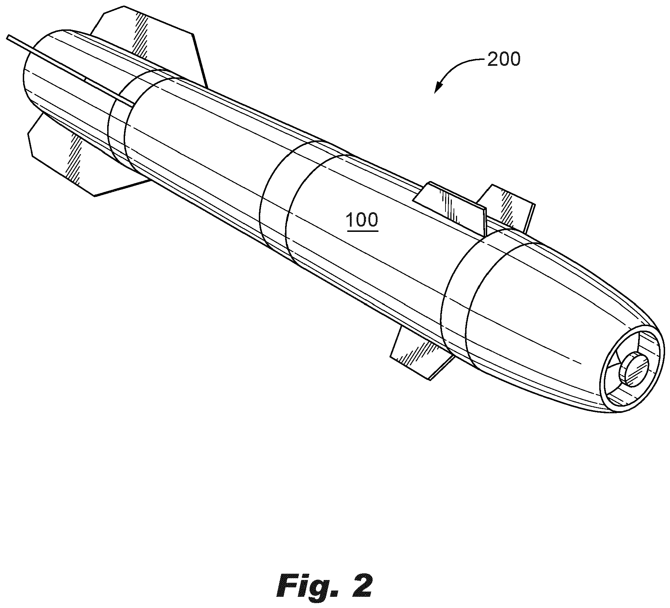

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Figs. 2-5.

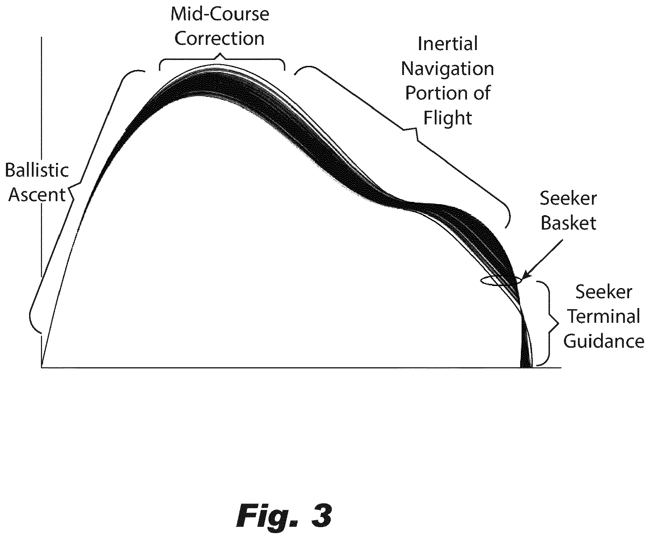

In accordance with at least one aspect of this disclosure, referring to Fig. 1, a course correction system 100 for a projectile (e.g., guided projectile 200 as shown in Fig. 2) can include a pre-steering trajectory determination module 101, which can include any suitable hardware and/or software module(s) configured to perform any suitable function disclosed herein. The pre-steering trajectory determination module 101 can be configured to receive a series of possible trajectories (e.g., as schematically shown in Figs. 3-5) from an estimation module 103. The estimation module 103 can include any suitable hardware and/or software module configured to perform and suitable function disclosed herein. The estimation module 103 can include a physical model defining trajectory as a function of gravitational pull and one or more launch variables (e.g., rifle barrel condition, muzzle velocity, windage, etc.)

The pre-steering trajectory determination module 101 can be configured to receive a sensor data from one or more on-board sensors 105 of the projectile. The pre-steering trajectory determination module 101 can also be configured to reduce the possible trajectories from the estimation module 103 to one or more refined trajectories (e.g., a single most likely trajectory) using the sensor data, and to output the one or more refined trajectories.

The pre-steering trajectory determination module 101 can be configured to output the one or more refined trajectories to a steering control module 107 of the projectile. The steering control module 107 can be configured to control one or more control surfaces (e.g., fins) or any other suitable steering component of the projectile.

In certain embodiments, the pre-steering trajectory determination module 101 can include the estimation module 103, e.g., as shown. However, it is contemplated that the possible trajectories data can be loaded on to the pre-steering trajectory determination module 101 or other suitable module connected thereto beforehand.

The estimation module 103 can be configured to execute a computational algorithm that inputs a plurality of randomized statistical values into the physical model (e.g., multiple layers per time iteration) to create a plurality of output possible trajectories per time instance (e.g., 40 different inputs for each variable per time X). For example, the computational algorithm can be a Monte Carlo simulation (e.g., as appreciated by those having ordinary skill in the art). Any other suitable computational or statistical algorithm is contemplated herein.

The estimation module 103 can be configured to repeat the computational algorithm for a plurality of time instances (e.g., X+1, X+2 ... X+n) and/or in real-time until the physical model is no longer descriptive of the trajectory due to steering. For example, e.g., as shown in Fig. 3, the estimation module 103 can operate both before apogee and after apogee until steering is activated (which causes unnatural motion not captured by the physical model). Any other suitable operation by the estimation module 103 is contemplated herein.

In certain embodiments, the system 100 can include the steering control module 107 configured to output steering commands, for example. In certain embodiments, the system 100 can include the one or more on-board sensors 105. The system 100 can include any other suitable components, e.g., associated with controlling the projectile (e.g., a control surface connected to the steering control module 107).

The one or more refined trajectories can include position values, velocity values, Mach values, and/or dynamic pressure values configured to be used by the steering control module for steering. Any other suitable values are contemplated herein.

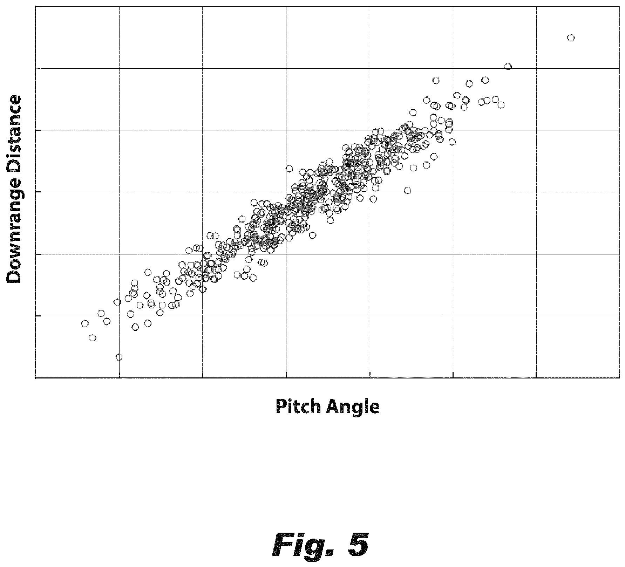

In certain embodiments, the sensor data can include heading and pitch angle. In certain embodiments, the refined trajectories can include a downrange distance selected from a plurality of possible downrange distances as a function of pitch angle (e.g., sensed by a sensor 105), e.g., as shown plotted in Fig. 5. Any other suitable trajectory related value is contemplated herein.

In accordance with at least one aspect of this disclosure, referring to Fig. 2, a projectile 200 can include a steering control module configured to input steering commands to one or more steering components of the projectile, and a course correction system for a projectile. Any suitable course correction system as disclosed herein, e.g., system 100 as described above, is contemplated herein.

In accordance with at least one aspect of this disclosure, a method of steering a projectile can include determining a series of possible trajectories using a physical model defining trajectory as a function of gravitational pull and one or more launch variables, receiving sensor data from one or more on-board sensors of the projectile, reducing the possible trajectories from the estimation module to one or more refined trajectories using the sensor data, and outputting the one or more refined trajectories to steer the projectile (e.g., for a midcourse correction). In certain embodiments, the method can include steering the projectile based on the one or more refined trajectories.

In certain embodiments, reducing can include correlating an onboard measured pitch and heading with the possible trajectories. For example, the closest match, or an interpolation between two possible trajectory values, or a statistical analysis, can become the refined trajectory for output for use in steering. For example, from the data shown in Fig. 5, a point can be selected for a given pitch angle. In certain embodiments, reducing can include curve fitting the possible trajectories using the sensor data and calculating a refined trajectory.

Referring to Fig. 3, a concept of operations (CONOPS) for a long range munition starts as a gun launched projectile transcending a ballistic trajectory. At or near apogee, the guidance system activates and steers towards a target. During the descent, the munition steers towards, and enters a "seeker basket." This is an area above the target the terminal seeker can detect and identify the item of interest and provide a pointing vector for the guidance system to intercept.

The size of the seeker basket is a guidance system requirement driver with a desire to minimize its area, and in turn, the target search area (e.g., which can improve accuracy and reduce collateral damage). Trajectory variation is driven by a variety of sources. The launch event is a significant contributor from muzzle velocity and gun pointing that amplify over time of flight without correction. Very small errors in launch conditions (e.g., rifle barrel condition, aimpoint accuracy) can greatly affect long range landing area. Windage can also affect the course. Embodiments utilize a technique that is valid before steering commands because embodiments utilize using the signature of the curve due to gravity.

A midcourse correction at or near apogee from GPS or other location techniques is useful to mitigate launch errors. Typically an onboard GPS system can provide data for position and velocity information for the correction. However this signal can be jammed or spoofed in contested spaces particularly with peer on peer, or near peer engagements. Alternatives to GPS are limited for multiple reasons. Additional sensors are undesired due to flight vehicle volume constraints, and additional costs are prohibitive for a one time use application.

Embodiments of this disclosure can utilize existing sensors and onboard processing of a standard guided munition with a terminal seeker. This activity provides a mid-course correction significantly reducing the uncertainty introduced as part of the launch event that translates to a size reduction of the seeker basket.

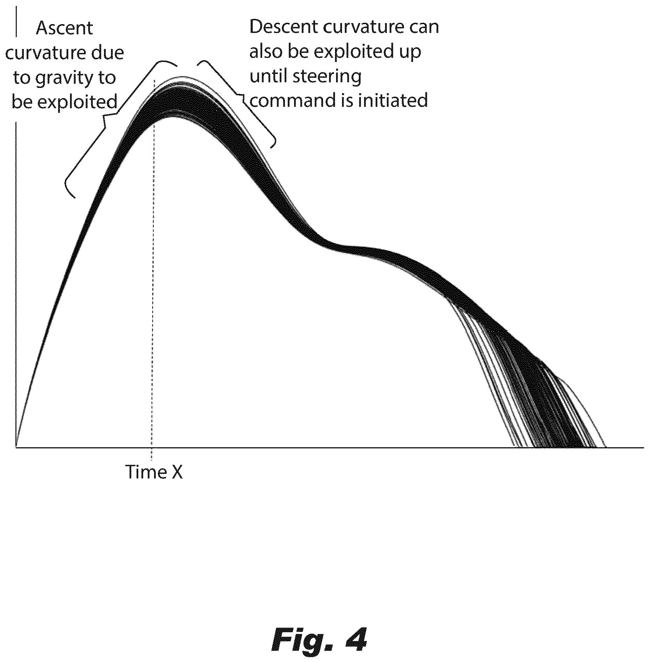

Referring to Fig. 4, during a munitions ballistic ascent, and initial descent until steering commands are activated, gravity produces a natural trajectory curvature that is defined primarily by the launch velocity, onboard propulsion if present, gun elevation, and projectile mass properties and aerodynamics. This curvature provides a signature that can be exploited.

Looking at a specific time slice X, one can examine the pitch or heading component relative to time or downrange distance. This generates a linear trend that can be used for down selecting from a specific group of trajectories. Further reduction in in trajectory candidates can be achieved through statistical analysis and through repetition of the process over time, for example. The process exploiting natural curvature can be valid until steering activation introduces an unnatural pitch and heading. These trajectories estimations can output position, velocity, Mach and dynamic pressure that can be used by the guidance system for gain scheduling, for example.

In certain embodiments, implementation of such a process can include two computational activity lanes that are then correlated to generate an estimated position, Mach number, and dynamic pressure output. The first computation activity can include calculating the heading and pitch angle from onboard sensor information. These calculations can be refined to the extent possible using sensors and pre-loaded information such as atmospheric information.

The second computation activity can start at gun launch and include multiple onboard trajectory estimators. Each instance of the trajectory estimator can be seeded with a statistical variation of its initial condition similar to a Monte Carlo. These trajectory estimators can be updated at a real-time, or faster than real-time rate. Onboard sensor information and/or external information such as wind profiles can be incorporated to refine the trajectory estimators to the extent practical. Another approach can include pre-generating these runs before launch and load tables, or curve fit data onto the projectile as part of the mission data.

In certain embodiments, a Monte Carlo can include a single model having different random numbers input for each variable of the model, and multiple time over. At every point in time, the same model can be run with a set of values that are different (selected at random at time zero). The system can randomize the model statistical inputs at start up (e.g., based on known errors/ranges in the variables). High fidelity models can use about 40 simultaneous layers of values. The inputs that can be randomly selected for each variable can include muzzle velocity error, pointing errors, atmospheric drag errors or other aerodynamic errors (fin misalignment), propulsion errors, and/or any other suitable errors.

Pitch angle can be the primary signature which tells which of the possible trajectories are correct. Pitch angle can allow removal of all incorrect trajectories, for example. As a result of the remaining trajectories, at the time when course location is made, the system can know all possibilities of where the projectile can travel to, and thus the seeker basket area is reduced. Then the guidance can control the projectile as desired to move to the seeker basket and/or landing position. Control may not occur during use of the Monte Carlo model, for example. As appreciated by one having ordinary skill in the art in view of this disclosure, one of the possible trajectory estimates, or a subset of trajectory estimates, running onboard is representative of the actual flight. The correlation activity can be performed between the onboard measured pitch and heading with the trajectory estimator values. The closest match, or an interpolation between two trajectory values, or statistical selection, can become the selected trajectory pulled from the pack for the guidance system utilization. Certain embodiments can perform a curve fit, e.g., to the data of Fig. 5, and can calculate the downrange value. This trend can also apply to other state information such as velocity, for example.

Embodiments can include a repetitive process with continually refined measurements and correlated with onboard trajectory estimation until active steering is enabled. During a munitions ballistic ascent, and initial descent until steering commands are activated, gravity produces a natural trajectory curvature that is defined primarily by the launch velocity, onboard propulsion if present, gun elevation, and projectile mass properties & aerodynamics. This curvature provides a signature that can be exploited by comparing pitch attitude to a series of trajectory estimations. These trajectory estimations can be, to a large extent, a Monte Carlo simulation.

Embodiments can reduce reliance on an onboard GPS system. When combined with a terminal seeker, this onboard GPS system could be eliminated or rendered inoperable allowing for the munition to fly in highly contested environments and still engage the target accurately.

As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer.

Aspects of this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the spirit and scope of the subject disclosure.

## Claims

1. A course correction system for a projectile, comprising:
a pre-steering trajectory determination module configured to:
receive a series of possible trajectories from an estimation module including a physical model defining trajectory as a function of gravitational pull and one or more launch variables;
receive a sensor data from one or more on-board sensors of the projectile; and
reduce the possible trajectories from the estimation module to one or more refined trajectories using the sensor data; and
output the one or more refined trajectories.

2. The system of claim 1, wherein the pre-steering trajectory determination module is configured to output the one or more refined trajectories to a steering control module of the projectile.

3. The system of claim 1 or 2, wherein the pre-steering trajectory determination module includes the estimation module.

4. The system of claim 3, wherein the estimation module is configured to execute a computational algorithm that inputs a plurality of randomized values into the physical model to create a plurality of output possible trajectories per time instance, optionally wherein the computational algorithm is a Monte Carlo simulation.

5. The system of claim 4, wherein the estimation module is configured to repeat the computational algorithm for a plurality of time instances and/or in real-time until one or both of apogee of fight or until the physical model is no longer descriptive of the trajectory due to steering.

6. The system of any preceding claim, wherein the system includes the steering control module configured to output steering commands.

7. The system of any preceding claim, wherein the refined trajectories include position values, velocity values, Mach values, and/or dynamic pressure values configured to be used by the steering control module for steering.

8. The system of any preceding claim, wherein the sensor data includes heading and pitch angle.

9. The system of any preceding claim, further comprising the one or more on-board sensors.

10. A projectile, comprising:
a steering control module configured to input steering commands to one or more steering components of the projectile; and
a course correction system for a projectile, comprising:
a pre-steering trajectory determination module configured to:
receive a series of possible trajectories from an estimation module including a physical model defining trajectory as a function of gravitational pull and one or more launch variables;
receive a sensor data from one or more on-board sensors of the projectile; and
reduce the possible trajectories from the estimation module to one or more refined trajectories using the sensor data; and
output the one or more refined trajectories to the steering control module.

11. The projectile of claim 10, wherein the pre-steering trajectory determination module:
is configured to output the one or more refined trajectories to a steering control module of the projectile.

12. The projectile of claim 10 or 11, wherein the pre-steering trajectory determination module includes the estimation module.

13. The projectile of claim 12, wherein the estimation module is configured to execute a computational algorithm that inputs a plurality of randomized values into the physical model to create a plurality of output possible trajectories per time instance, optionally wherein:
the computational algorithm is a Monte Carlo simulation; and /or
the estimation module is configured to repeat the computational algorithm for a plurality of time instances and/or in real-time until one or both of apogee of fight or until the physical model is no longer descriptive of the trajectory due to steering.

14. A method of steering a projectile, comprising:
determining a series of possible trajectories using a physical model defining trajectory as a function of gravitational pull and one or more launch variables;
receiving sensor data from one or more on-board sensors of the projectile;
reducing the possible trajectories from the estimation module to one or more refined trajectories using the sensor data; and
outputting the one or more refined trajectories to steer the projectile.

15. The method of claim 14, wherein reducing includes:
correlating an onboard measured pitch and heading with the possible trajectories, wherein the closest match or an interpolation between two possible trajectory values, or statistical analysis, becomes the refined trajectory for output for use in steering; and/or
curve fitting the possible trajectories using the sensor data and calculating a refined trajectory.
